Europäisches Patentamt

European Patent Office

Office européen des brevets

(19)

(11) Numéro de publication : **0 171 789**
**B1**

(12) **FASCICULE DE BREVET EUROPÉEN**

(45) Date de publication du fascicule du brevet :
**09.08.89**

(51) Int. Cl.⁴ : **H 04 J   3/06**

(21) Numéro de dépôt : **85110127.9**

(22) Date de dépôt : **13.08.85**

---

(54) **Dispositifs de synchronisation de trame.**

---

(30) Priorité : **17.08.84 FR 8412915**
**14.12.84 FR 8419175**

(43) Date de publication de la demande :
**19.02.86 Bulletin 86/08**

(45) Mention de la délivrance du brevet :
**09.08.89 Bulletin 89/32**

(84) Etats contractants désignés :
**BE DE FR GB IT LU NL**

(56) Documents cités :
**EP--A-- 0 103 163**
**DE--A-- 2 345 491**
**DE--B-- 2 657 365**
**US--A-- 3 069 504**
**US--A-- 3 597 539**
**PATENTS ABSTRACTS OF JAPAN, vol. 7, no. 214 (E-199) [1359], 21 septembre 1983; & JP - A - 58 107 753 (NIPPON DENKI K.K.) 27.06.1983**

(73) Titulaire : **ALCATEL CIT**
**33, rue Emeriau**
**F-75015 Paris (FR)**

(72) Inventeur : **Surie, Serge**
**60, rue Bronzac**
**F-94240 l'Hay les Roses (FR)**

(74) Mandataire : **Weinmiller, Jürgen et al**
**Lennéstrasse 9 Postfach 24**
**D-8133 Feldafing (DE)**

EP 0 171 789 B1

Jouve, 18, rue St-Denis, 75001 Paris, France

## Description

La présente invention concerne la synchronisation de trame dans un système de transmission de données binaires dans lequel les données sont transmises sous forme d'un train isochrone organisé en trames pourvues d'un mot de verrouillage formé de groupes de bits pouvant se réduire à un seul élément, répartis au sein de la trame (US-A-3 069 504).

Un tel système de transmission est utilisé au niveau des lignes d'abonnés dans le cadre de la numérisation de réseau d'abonné avec intégration de services (RNIS). Dans ce cadre, les terminaux d'abonnés sont mis à l'état de veille en l'absence de communication et activés au début de chaque communication. Leur activation qui doit être la plus rapide possible nécessite une synchronisation de trame la plus courte possible.

La recherche d'un mot de verrouillage réparti dans une trame se fait le plus souvent à l'aide d'un registre à décalage mémorisant les données reçues sur la durée d'un mot de verrouillage avec des sorties parallèles disposées les unes par rapport aux autres de manière à faire apparaître à certains instants tous les bits d'un mot de verrouillage, et à l'aide d'un décodeur connecté à ces sorties parallèles du registre à décalage identifiant le mot de verrouillage chaque fois qu'il se présente (DE-B-2 657 365). Une telle recherche, très rapide, puisqu'elle dure au maximum un peu moins de deux trames consécutives, nécessite souvent un registre à décalage à très grand nombre d'étages car il n'est pas rare qu'un mot de verrouillage s'étende sur plus d'une centaine de bits d'une trame.

Pour éviter cet inconvénient, il a été proposé de procéder à la recherche d'un mot de verrouillage par une suite de tests consistant à rechercher le premier bit reçu compatible avec la valeur du premier bit de mot de verrouillage, à adopter le découpage en trame lui correspondant et à vérifier un à un les bits suivants du mot de verrouillage déterminé par ce découpage, tout test négatif entraînant une reprise à l'origine de la procédure de synchronisation. Ce procédé présente l'avantage de ne plus nécessiter la mémorisation de toutes les données reçues sur la durée d'un mot de verrouillage mais il a l'inconvénient d'être lent.

La présente invention a pour but une synchronisation de trame de mise en oeuvre simple plus rapide que la dernière citée.

L'invention a pour objet un dispositif de synchronisation de trame comportant :

des moyens de cadencement engendrant un signal d'horloge à partir d'une sélection des périodes du signal de rythme du train de données reproduisant un motif périodique formé par des emplacements relatifs de bits sur la durée d'une trame dont au moins certains sont distribués conformément à la répartition des bits du mot de verrouillage au sein d'une trame et qui forment n groupes de q éléments (n et q étant des entiers) régulièrement répartis sur la durée d'une trame,

des moyens de déphasage permettant sur ordre, de faire effectuer au signal d'horloge un saut de phase d'une valeur égale à au moins une période du signal de rythme du train de données,

un registre à décalage à entrée série et sorties parallèles avec un nombre d'étages au moins égal à celui des emplacements de donnée retenus dans un motif, qui est cadencé par le signal d'horloge lui parvenant des moyens de cadencement et de déphasage, et sur l'entrée duquel est appliqué le train de données,

un décodeur de mot de verrouillage à entrées parallèles connectées aux sorties du registre à décalage correspondant dans un motif aux emplacements des bits d'un mot de verrouillage,

des moyens de commande de déphasage délivrant un ordre de déphasage à l'intention des moyens de déphasage lorsque le décodeur n'a pas reconnu de mot de verrouillage parmi les données mémorisées dans le registre à décalage sur une durée minimale de deux mots de verrouillage consécutifs.

Par la sélection des données effectuée au moyen du signal d'horloge on réduit considérablement la quantité des données mémorisées car on peut espérer avoir un motif complété présentant une période plus courte par rapport à la durée d'une trame d'au moins un ordre de grandeur. En contre partie, la sélection opérée peut se révéler fausse, soit définitivement parce qu'elle ne permet pas d'extraire du train de données tous les bits du mot de verrouillage soit, provisoirement, le début de la sélection coïncidant avec un ensemble de bits du mot de verrouillage qui n'est pas l'ensemble de départ. Le premier cas nécessite une nouvelle sélection obtenue en imposant un saut de phase au signal d'horloge et peut se présenter plusieurs fois consécutivement, moins toutefois que le nombre d'emplacements de donnée sur lequel s'étend une période du motif. Le deuxième cas se résoud en attendant qu'un mot de verrouillage complet se présente dans la sélection ce qui prend au maximum la durée de deux mots de verrouillage.

Selon le mode de réalisation le plus simple, le registre à décalage possède un nombre d'étages correspondant à celui des emplacements de donnée retenus dans un motif. Le moyen de commande de déphasage engendre des ordres de déphasage à intervalles réguliers de durée égale à celle de deux trames, au saut de phase imposé audit signal d'horloge près tant que le décodeur ne reconnaît pas de mot de verrouillage.

Selon une première variante, le registre à décalage est formé de deux parties qui sélectionnent en parallèle des données, qui ont chacune un nombre d'étages égal à celui des emplacements de donnée retenus dans un motif et qui sont cadencées par deux versions déphasées entre elles du signal d'horloge. La première partie est cadencée par une première version du signal d'horloge et formée d'une suite d'étages à entrées de prépositionnement et sorties parallèles ayant une commande de prépositionnement contrôlée par les moyens de commande de déphasage et ses sorties parallèles connectées aux entrées du décodeur. La deuxième partie est cadencée par une deuxième version du signal d'horloge déphasée par rapport à la première version d'une valeur égale au saut de phase que les moyens de déphasage engendrent en une fois, et formée d'une suite d'étages dont les sorties parallèles sont connectées aux entrées de prépositionnement des étages de la première partie. Le moyen de commande de déphasage délivre des ordres de déphasage et de chargement parallèle des étages de la première partie du registre à décalage à intervalles réguliers de durée égale à celle d'une trame, au saut de phase imposé audit signal d'horloge près, tant que le décodeur ne reconnaît pas le mot de verrouillage. Les étages de la deuxième partie du registre à décalage mémorisent des données conformément à la sélection qui sera obtenue à partir du prochain saut de phase impose au signal d'horloge et permettent une mise à jour immédiate des étages de la première partie du registre à décalage dès ce prochain saut de phase effectué alors que sans eux, cette mise à jour aurait pris la durée d'un mot de verrouillage. Ce gain de temps permet de doubler la cadence des ordres de déphasage en l'absence de reconnaissance de mot de verrouillage par le décodeur.

Selon une deuxième variante, le dispositif de synchronisation est en outre pourvu d'un circuit de prédiction constitué d'un décodeur en parallèle sur le premier, avec des entrées permutées de manière à permettre de reconnaître un mot de verrouillage ayant subi une rotation, et son registre à décalage est formé de trois parties qui sélectionnent en parallèle les données et qui sont cadencées par trois versions déphasées entre elles du signal d'horloge. La première partie du registre à décalage est cadencée par une première version du signal d'horloge, comporte une suite d'étages en nombre au moins égal à celui n. q des emplacements de bits retenus dans un motif avec des entrées parallèles de prépositionnement et des sorties parallèles connectées aux entrées du décodeur et du circuit de prédiction, et est pourvu d'une commande de prépositionnement contrôlée par les moyens de commande de déphasage. La deuxième partie du registre à décalage est cadencée par une deuxième version du signal d'horloge déphasée par rapport à la première d'une valeur égale au saut de phase engendré en une fois par les moyens de déphasage, comporte une suite d'étages en nombre au moins égal à celui n q - 1 des emplacements de bits retenus dans un motif diminué d'une unité, avec des entrées de prépositionnement pour les premiers étages et des sorties parallèles pour tous les étages connectés aux entrées de prépositionnement des étages de la première partie, et est pourvue d'une commande de prépositionnement partielle de ses premiers étages contrôlée par les moyens de commande de déphasage. La troisième partie du registre à décalage est cadencée par une troisième version du signal d'horloge déphasée par rapport à la deuxième version et respectivement la première d'une valeur égale à celle d'un saut de phase et respectivement deux sauts de phase engendrés en une fois par les moyens de déphasage et possède des étages à sorties parallèles connectées aux entrées de prépositionnement de la deuxième partie du registre à décalage. En supposant que le circuit de prédiction identifie une version du mot de verrouillage ayant subi une rotation correspondant à p groupes d'emplacements relatifs de bits du motif, p étant un entier compris entre 1 et n-1, les premiers étages à entrées de prépositionnement de la deuxième partie du registre sont au nombre de r. q, r étant le plus grand des nombres p et n-p, et la troisième partie du registre a un nombre d'étages inférieur d'une unité r. p-1.

La prédiction effectuée au niveau de la sélection soumise au décodeur permet de diminuer de moitié au moins le temps minimum de détection d'une mauvaise sélection puisque le nombre p peut être pris égal à n/2 si n est pair ou à (n + 1)/2 si n est impair ce qui se traduit par une synchronisation pratiquement deux fois plus rapide.

D'autres caractéristiques et avantages de l'invention ressortiront de la description ci-après de plusieurs modes de réalisation donnés à titre d'exemple. Cette description sera faite en regard du dessin dans lequel :

la figure 1 représente le schéma d'un dispositif de synchronisation avec un registre à décalage constitué d'une seule chaîne d'étages,

les figures 2, 3 et 4 représentent les schémas de dispositifs de synchronisation avec un registre à décalage constitué de deux parties parallèles,

la figure 5 détaille des circuits particuliers du dispositif représenté à la figure 4 et

la figure 6 représente le schéma d'un dispositif de synchronisation avec un circuit de prédiction et un registre à décalage à trois parties parallèles.

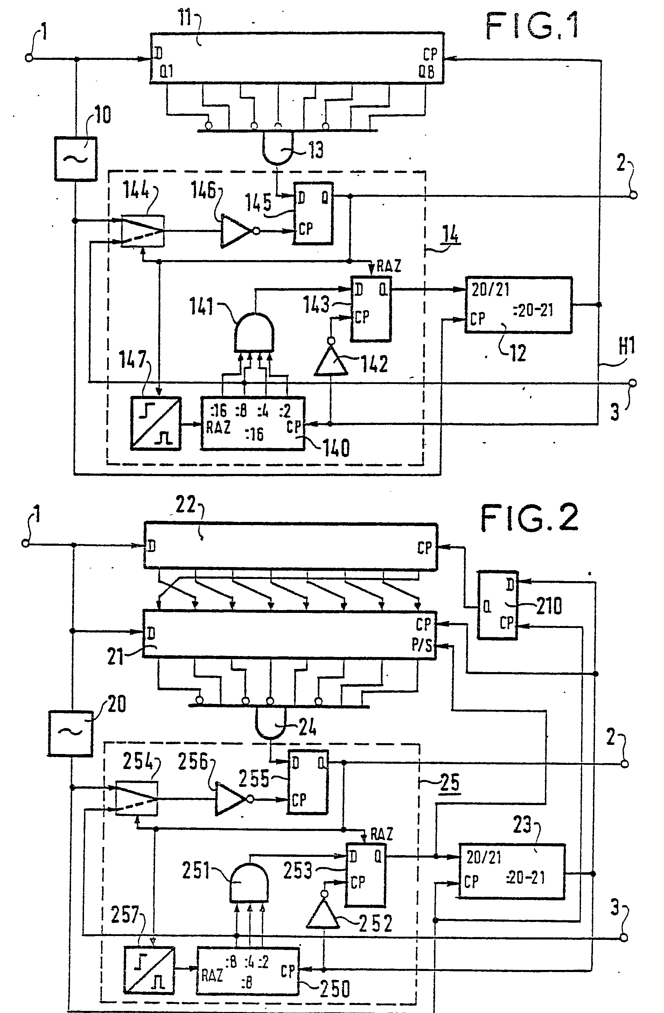

La figure 1 représente le schéma d'un dispositif de synchronisation de trames prévu pour un système de transmission de données binaires dans lequel les données sont transmises sous la forme d'un train isochrone à 160 k bits/s organisé en trames constituées chacune de huit secteurs de vingt bits avec un mot de verrouillage de huit bits uniformément réparti ayant la valeur binaire 11010010 et occupant le premier emplacement de chaque secteur.

Le dispositif comporte un circuit de récupération 10 du rythme à 160 k Hz du train de données appliqué à une entrée 1 du dispositif, un registre à décalage 11 à huit étages avec une entrée série et des sorties parallèles recevant le train de données, des moyens de cadencement avec des moyens de déphasage incorporés constitués d'un compteur diviseur par vingt ou vingt et un 12 opérant sur le rythme a 160 k Hz fourni par le circuit de récupération de rythme 10 et délivrant un signal d'horloge $H_1$ cadençant le registre à décalage 11, un décodeur de mot de verrouillage formé d'une porte logique de type « et » 13 à huit entrées qui sont reliées aux sorties parallèles du registre à décalage 11 et dont certaines sont pourvues d'un inverseur tenant compte de la valeur 0 de certains bits du mot de verrouillage, et un circuit de commande de déphasage 14 déterminant en fonction du signal de sortie du décodeur le choix de la valeur vingt ou vingt et un, avec laquelle le diviseur 12 opère.

Le circuit de récupération de rythme 10 est formé, de la manière habituelle, au moyen d'un oscillateur pourvu d'une boucle à verrouillage de phase qui le synchronise sur les transitions du train de données reçues appliqué sur l'entrée 1.

Le registre à décalage 11 est du type à déclenchement sur les fronts montants de son signal d'horloge.

Le signal d'horloge $H_1$ appliqué au registre à décalage 11 est construit à partir d'une sélection des périodes du signal de rythme du train de données reproduisant les emplacements relatifs des bits des mots de verrouillage. Dans le cas présent, les bits du mot de verrouillage sont répartis un à un en tête de chaque secteur de trame c'est-à-dire tous les vingt bits. Le signal d'horloge $H_1$ peut donc être obtenu à partir d'une sélection d'une période sur vingt du signal de rythme du train de données. Le fait que seules les transitions montantes du signal d'horloge $H_1$ importent pour le cadencement du registre à décalage permet de limiter la sélection à une simple division du signal de rythme du train de données dans un rapport vingt.

Le déphasage du signal d'horlorge $H_1$ est réalisé en remplaçant une période de division par vingt par une période de division par vingt et un. Cela revient à retarder la phase du signal d'horloge $H_1$ par pas 30 correspondant à une période du signal de rythme du train des données reçues.

Le circuit de commande de déphasage 14 comporte :

un compteur-diviseur par seize 140 recevant sur une entrée de comptage le signal d'horloge $H_1$,

un décodeur 141 de l'état quinze du compteur-diviseur 140,

un inverseur 142 du signal d'horloge $H_1$

une première bascule de type D, 143 a déclenchement sur front montant, cadencée par le signal d'horloge $\overline{H_1}$ issu de l'inverseur 142 et dont l'entrée D est reliée à la sortie du décodeur 141,

· un circuit d'aiguillage 144 à deux entrées et une sortie, dont l'une des entrées est connectée à la sortie du circuit 10 de récupération du rythme à 160 kHz du train de données et l'autre à une sortie du compteur-diviseur 140 fournissant un signal d'horloge à 1 k Hz,

une deuxième bascule de type D, 145, à déclenchement sur front montant, cadencée par le signal d'horloge délivré par le circuit d'aiguillage 144, préalablement inversé par un inverseur 146, dont l'entrée D est connectée à la sortie de la porte logique de type « et » 13 et dont le signal sur la sortie Q est appliqué à une entrée de remise à zéro de la bascule 143 ainsi qu'à une entrée de commande du circuit d'aiguillage 144,

ledit inverseur 146, et

un détecteur 147 des transitions montantes du signal sur la sortie Q de la bascule 145, commandant la remise à zéro du compteur-diviseur 140.

Le décodeur 141 est constitué d'une porte logique de type « et » à quatre entrées reliées à quatre sorties de division par deux, quatre, huit et seize, respectivement, du compteur-diviseur 140. Il sert à engendrer une commande déphasage, correspondant à un niveau logique 1 sur sa sortie, au rythme de 500 Hz, c'est-à-dire avec une période de répétition de durée égale à celle de deux trames du train de données reçues.

La bascule de type D 143 qui échantillonne le signal de sortie de la porte logique de type « et » 141 au rythme du signal d'horloge $H_1$ préalablement inversé par l'inverseur 142, contrôle par sa sortie Q l'entrée de choix de la valeur vingt ou vingt et un avec laquelle opère le diviseur 12, entrée qui est supposée au niveau logique 0 pour une division par vingt et au niveau logique 1 pour une division par vingt et un. Cette bascule 143 assure le blocage ou la transmission au diviseur 12 des commandes de déphasage engendrées par la porte logique de type « et » 141 en fonction du niveau logique 1 ou 0 alors appliqué sur son entrée de remise à zéro et maintient à vingt la valeur de division avec laquelle opère ce compteur-diviseur entre deux commandes de déphasage.

Le circuit d'aiguillage 144 est commandé par la bascule 145 pour transmettre le signal d'horloge fourni par le circuit 10 ou le signal d'horloge à 1 k Hz disponible sur la sortie de division par huit du compteur-diviseur 140, en fonction du niveau logique 0 ou 1 du signal sur la sortie Q de cette bascule.

La bascule 145 sert à mémoriser sur la durée d'une trame une indication de détection du mot de verrouillage trame fournie par la porte logique 13. Le signal sur sa sortie Q qui commande, comme mentionné ci-avant, la bascule 143, le circuit d'aiguillage 144 ainsi que, par l'intermédiaire du détecteur 147, le compteur-diviseur 140, est appliqué par ailleurs à une sortie 2 du dispositif ; il traduit par le niveau logique 1 ou 0 que le signal d'horloge à 1 k Hz disponible sur la sortie de division par huit du compteur-diviseur 140 et délivré sur une sortie 3 du dispositif est synchronisé sur le rythme trame.

La commande de déphasage s'effectue au maximum avec une fréquence de répétition de 500 Hz c'est-à-dire toutes les deux trames du train de données reçues. Entre deux commandes de déphasage, le registre à décalage 11 cadencé à un rythme de 8 k Hz recopie une donnée sur vingt du train de données reçues. Si la sélection n'est pas bonne c'est-à-dire, si les données enregistrées ne concernent pas le mot de verrouillage, celui-ci n'est pas reconnu par la porte logique de type « et » 13. La commande de déphasage engendrée par la porte logique du type « et » 141 lorsque le compteur-diviseur 140 atteint l'état 15 est enregistrée par la bascule 143 et parvient au diviseur 12 qui l'exécute. La sélection suivante recule d'un pas par rapport aux rangs des données dans les trames et ainsi de suite (au plus dix neuf fois) jusqu'à ce qu'elle devienne correcte et intéresse les bits du mot de verrouillage trame. Le début d'une sélection correcte ne coïncide pas nécessairement avec le début du mot de verrouillage trame qui commence en général, par apparaître tronqué. Il est nécessaire d'attendre le premier mot de verrouillage trame complet pour pouvoir le reconnaître ce qui se produit obligatoirement sur une durée de deux mots de verrouillage trame et par conséquent sur la durée de deux trames qui correspond à la période du rythme de 500 Hz de répétition des commandes de déphasage. La reconnaissance du mot de verrouillage par la porte logique de type « et » 13 du décodeur se traduit par un niveau logique 1 sur la sortie Q de la bascule 145 qui sert de signal de synchronisation de trame appliqué en sortie 2 du dispositif, qui remet à zéro la bascule de type D 145 ainsi que, par son apparition, le compteur-diviseur 140 et qui positionne le circuit d'aiguillage 144 pour la transmission du signal d'horloge à 1 k Hz issu du compteur-diviseur 140 ; ce positionnement du circuit d'aiguillage 144 maintient le niveau logique 1 en sortie de la bascule 145 et, par suite, empêche l'enregistrement d'une commande de déphasage dans la bascule de type D 143 pendant la durée d'une période de ce signal d'horloge, c'est-à-dire pendant la durée d'une trame. Tant que la porte logique de type « et » 13 reconnaît le mot de verrouillage au rythme du signal d'horloge à 1 k Hz, la bascule de type D 143, maintenue a zéro, bloque toute commande de déphasage issue de la porte logique de type « et » 141. La perte du mot de verrouillage provoque la réapparition des commandes périodiques de déphasage et un nouveau processus de synchronisation.

Bien entendu, le dispositif représenté peut être complété par tout circuit, non illustré, de mise en oeuvre de critères complémentaires d'acquisition ou perte de synchronisation permettant notamment de n'autoriser l'enclenchement d'un nouveau processus de synchronisation, par application du niveau logique 0 sur l'entrée de remise à zéro de la bascule 143, que lorsqu'un ensemble prédéterminé de critères de perte de synchronisation sont satisfaits.

La figure 2 représente une variante du dispositif de synchronisation de trames précédent qui permet une synchronisation deux fois plus rapide. Celle-ci comporte un circuit de récupération 20 du rythme à 160 kHz du train de données reçues, un registre à décalage à deux parties parallèles 21, 22 recevant le train de données reçues appliqué sur l'entrée 1 du dispositif, des moyens de cadencement avec des moyens de déphasage incorporés comportant un diviseur par vingt ou vingt et un 23 qui opère sur le rythme à 160 k Hz fourni par le circuit de récupération du rythme 20 et qui est à l'origine des signaux d'horloge fournis aux deux parties 21 et 22 du registre à décalage, un décodeur de mot de verrouillage formé d'une porte logique de type « et » 24 à huit entrées qui sont reliées aux sorties parallèles d'une partie 21 du registre à décalage et dont certaines sont munies d'inverseurs tenant compte de la valeur 0 de certains bits du mot de verrouillage, et un circuit de commande de déphasage 25 des signaux d'horloge du registre à décalage déterminant en fonction du signal de sortie du décodeur le choix de la valeur vingt ou vingt et un avec laquelle le diviseur 23 opère.

Comme précédemment le circuit de récupération de rythme 10, le circuit de récupération de rythme 20 est formé d'un oscillateur pourvu d'une boucle à verrouillage de phase qui le synchronise sur les transitions du train de données reçues appliquées à l'entrée 1 du dispositif.

Le registre à décalage présente deux parties parallèles 21, 22 du type à déclenchement sur les fronts montants du signal d'horloge. Elles ont chacune une entrée série sur laquelle est appliqué le train des données reçues et huit étages de registre à sorties parallèles, et sont cadencées par deux versions déphasées entre elles du signal d'horloge à 8 k Hz délivré par le diviseur par vingt ou vingt et un 23.

La première partie 21 du registre à décalage est formée d'étages de registre pourvus d'entrées parallèles de prépositionnement qui sont reliées aux sorties parallèles des étages de registre de la deuxième partie 22 de rangs immédiatement inférieurs à l'exception de l'entrée parallèle de prépositionnement du premier étage qui est reliée à la sortie parallèle du dernier étage de registre de la deuxième partie 22. Cette première partie comporte une entrée de commande de prépositionnement P/S active au niveau logique 1 contrôlée par le circuit de commande de déphasage 25. Elle reçoit sur son entrée d'horloge CP le signal d'horloge délivré par le diviseur par vingt ou vingt et un 23. La deuxième partie 22 du registre à décalage a son entrée horloge CP connectée à la sortie du diviseur par vingt ou vingt et un 23 par l'intermédiaire d'une bascule de type D 210 à déclenchement sur front montant qui est cadencée par le rythme à 160 k Hz délivré par le circuit de récupération de rythme et qui impose au signal d'horloge un retard égal à la durée d'une donnée reçue.

Cette deuxième partie 22 effectue une sélection de données en retard d'un pas par rapport à celle faite par la première partie 21. Comme les sauts de phase sont obtenus, comme précédemment, en remplaçant dans le signal d'horloge une période de division par vingt par une période de division par vingt et un et correspondent à des retards d'un pas dans les trames du train de données, la sélection effectuée par la deuxième partie 22 du registre à décalage est celle qui sera effectuée par la première partie 21 du registre à décalage après exécution de la prochaine commande de déphasage. Le contenu de la deuxième partie 22 du registre à décalage permet donc une mise à jour immédiate du contenu de la première partie 21 après chaque saut de phase évitant une attente de la durée d'un mot de synchronisation. Comme le transfert des contenus des étages s'effectue au cours d'un temps d'horloge, il est tenu compte du décalage manqué par un décalage entre les rangs des entrées parallèles de prépositionnement des étages de registre de la première partie 21 et les rangs des sorties parallèles des étages de sortie de la deuxième partie 22 qui leur sont connectées.

En variante, non illustrée, l'entrée de prépositionnement du premier étage de la première partie 21 du registre à décalage sera connectée à l'entrée 1 du dispositif, en parallèle avec les entrées série des deux parties du registre, la sortie du dernier étage de la deuxième partie 22 du registre n'étant plus alors utilisée.

Le circuit de commande de déphasage comporte, comme précédemment :

un compteur-diviseur 250 recevant sur une entrée de comptage le signal d'horloge délivré par le diviseur 23, mais ce compteur-diviseur 250 ne divise plus que par huit pour tenir compte du gain de temps obtenu par la mise à jour parallèle de la première partie 21 du registre à décalage,

un décodeur 251 de l'état non plus quinze mais sept du compteur-diviseur 250,

un inverseur 252 du signal d'horloge délivré par le diviseur 23,

une première bascule de type D, 253, à déclenchement sur front montant, cadencée par le signal d'horloge issu de l'inverseur 252 et dont l'entrée D est reliée à la sortie du décodeur 251,

un circuit d'aiguillage 254, à deux entrées et une sortie, dont l'une des entrées est connectée à la sortie du circuit 20 de récupération du rythme à 160 k Hz du train de données et l'autre à une sortie du compteur-diviseur 250 fournissant un signal d'horloge à 1 k Hz,

une deuxième bascule de type D 255 à déclenchement sur front montant, cadencée par le signal d'horloge délivré par le circuit d'aiguillage 254, préalablement inversé par un inverseur 256, dont l'entrée D est connectée à la sortie de la porte logique de type « et » 24 et dont le signal sur la sortie Q est appliqué à une entrée de remise à zéro de la bascule 253 ainsi qu'à une entrée de commande du circuit d'aiguillage 254,

ledit inverseur 256, et

un détecteur 257 des transitions montantes du signal sur la sortie Q de la bascule 255, commandant la remise à zéro du compteur-diviseur 250.

Le décodeur 251 est constitué d'une porte logique de type « et » à trois entrées reliées à trois sorties de division par deux, quatre et huit, respectivement, du compteur-diviseur 250. Il sert à engendrer une commande de déphasage, correspondant à un niveau logique 1 sur sa sortie, au rythme de 1 k Hz, c'est-à-dire avec une période de répétition de durée égale à celle d'une trame du train de données reçues.

La bascule de type D 253, qui échantillonne le signal de sortie de la porte logique de type « et » 251 au rythme du signal d'horloge fourni par le diviseur 23 préalablement inversé par l'inverseur 252, contrôle par sa sortie Q l'entrée de choix de la valeur vingt ou vingt et un avec laquelle opère le diviseur 23, entrée qui est supposée au niveau logique 0 pour une division par vingt et au niveau logique 1 pour une division par vingt et un. Cette bascule 253 assure le blocage ou la transmission au diviseur 23 des commandes de déphasage engendrées par la porte logique de type « et » 251 en fonction du niveau logique 1 ou 0 alors appliqué sur son entrée de remise à zéro et maintient à vingt la valeur de division avec laquelle opère ce compteur-diviseur entre deux commandes de déphasage. Le signal sur la sortie Q de la bascule 253 est appliqué par ailleurs à l'entrée de commande de prépositionnement P/S de la première partie 21 du registre à décalage pour commander le transfert des contenus des étages de la deuxième partie 22 du registre à décalage dans les étages de la première partie 21 de ce registre lors de l'introduction d'un déphasage dans le signal d'horloge délivré par le diviseur 23.

Le circuit d'aiguillage 254 est commandé par la bascule 255 pour transmettre le signal d'horloge fourni par le circuit 20 ou le signal d'horloge à 1 k Hz disponible sur la sortie de division par huit du compteur-diviseur 250, en fonction du niveau logique 0 ou 1 du signal sur la sortie Q de cette bascule.

La bascule 255 sert à mémoriser sur la durée d'une trame une indication de détection du mot de verrouillage trame fournie par la porte logique 24. Le signal sur sa sortie Q qui commande, comme mentionné ci-avant, la bascule 253, le circuit d'aiguillage 254 ainsi que, par l'intermédiaire du détecteur 257, le compteur-diviseur 250, est appliquée par ailleurs à la sortie 2 du dispositif ; il traduit par le niveau logique 1 ou 0 que le signal d'horloge à 1 k Hz disponible sur la sortie de division par huit du compteur-diviseur 250 et délivré sur la sortie 3 du dispositif est synchronisé sur le rythme trame.

La commande de déphasage s'effectue au maximum avec une fréquence de répétition de 1 k Hz c'est-à-dire toutes les trames du train reçu. Entre deux commandes de déphasage, la première partie 21 du registre à décalage recopie la sélection des données faite par la deuxième partie 22 puis poursuit cette sélection tandis que la deuxième partie 22 du registre à décalage entame la prochaine sélection. Si la sélection de la première partie 21 du registre à décalage n'est pas la bonne, les données mémorisées n'appartenant pas au mot de verrouillage de trame, ce dernier n'est pas reconnu par le décodeur 24 qui n'annule pas prochaine commande de déphasage engendrée par la porte logique de type « et » 251 ; cette commande de déphasage est enregistrée par la bascule de type D 253 pour être exécutée et provoquer un changement de sélection, et ainsi de suite (au plus dix neuf fois) jusqu'à une sélection correcte. Lorsqu'une sélection correcte se présente, le décodeur examine dès le départ une sélection des bits du mot de verrouillage transférée de la deuxième partie 22 du registre à décalage et formée, en général, de la juxtaposition de la fin d'un mot de verrouillage et du début du suivant. Au bout d'une durée égale au plus à celle d'un mot de verrouillage, le mot de verrouillage suivant est complété et reconnu par le décodeur 24 ce qui se traduit sur la sortie Q de la bascule 255 par un niveau logique 1 qui est utilisé comme signal de synchronisation de trame appliqué en sortie 2 du dispositif, qui remet à zéro la bascule de type D 253 ainsi que, par son apparition, le compteur-diviseur 250 et qui positionne le circuit d'aiguillage 254 pour la transmission du signal d'horloge à 1 k Hz issu du compteur-diviseur 250 ; ce positionnement du circuit d'aiguillage 254 maintient le niveau logique 1 en sortie de la bascule 255 et, par suite, empêche l'enregistrement d'une commande de déphasage dans la bascule de type D 253 pendant la durée d'une période de ce signal d'horloge, c'est-à-dire pendant la durée d'une trame. Tant que le décodeur 24 reconnaît le mot de verrouillage au rythme du signal d'horloge à 1 k Hz, la bascule de type D 253, maintenue à zéro, bloque toute commande de déphasage issue de la porte logique de type « et » 251.

La perte d'un mot de verrouillage provoque la réapparition de commandes périodiques de déphasage entraînant le déroulement d'un nouveau processus de synchronisation.

Bien entendu, comme précédemment, le dispositif représenté peut être complété par tout circuit, non illustré, de mise en oeuvre de critères complémentaires d'acquisition ou perte de synchronisation permettant notamment de n'autoriser l'enclenchement d'un nouveau processus de synchronisation, par application du niveau logique 0 sur l'entrée de remise à zéro de la bascule 253, que lorsqu'un ensemble prédéterminé de critères de perte de synchronisation sont satisfaits.

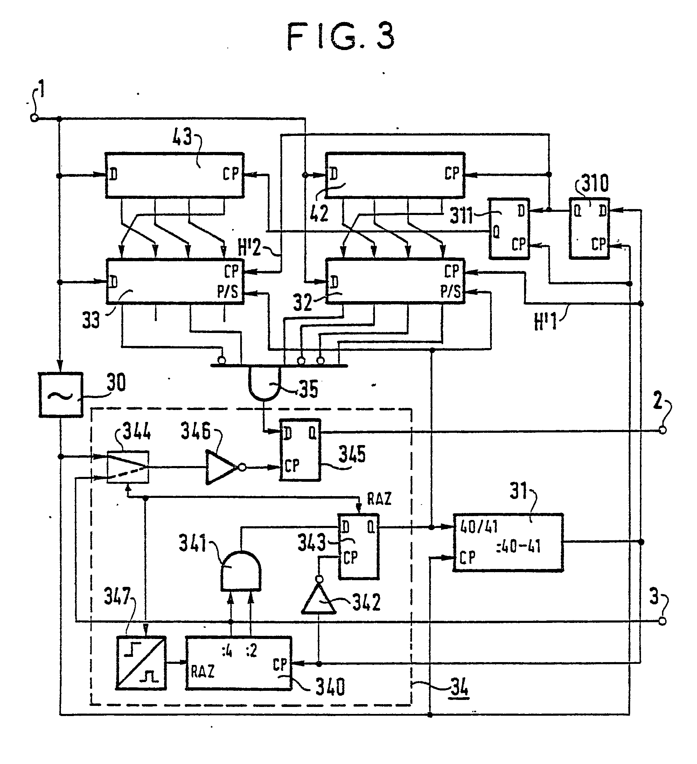

La figure 3 représente une première adaptation du dispositif de synchronisation de la figure 2 à un mot de verrouillage non uniformément réparti dans une trame, le train de données isochrones à 160 k bit/s étant organisé en trames constituées chacune de quatre secteurs de quarante bits avec un mot de verrouillage de six bits 101010 répartis en un bit de valeur 1 en tête du premier secteur, un groupe de deux bits de valeurs 01 en tête du deuxième secteur, un bit de valeur 0 en tête du troisième secteur et un groupe de deux bits de valeurs 10 en tête du quatrième secteur.

Pour engendrer le motif dont est tiré le signal d'horloge du registre à décalage, on complète le mot de synchronisation de la manière suivante : 1 x 010 y 10, x et y étant les données figurant en deuxième position respectivement dans les premier et troisième secteurs. Cela permet d'en tirer un motif formé de quatre groupes de deux bits placés chacun en tête d'un secteur. On considère ensuite ce motif comme la juxtaposition de deux sous motifs de quatre bits 1001 et x 1 y 0 chacun uniformément répartis dans les trames et l'on engendre deux signaux d'horloge $H'_1$ et $H'_2$ correspondant respectivement à ces sous-motifs. Ces deux signaux d'horloge $H'_1$ et $H'_2$ sont formés ici de deux versions d'un signal à 4 k Hz déphasées entre elles d'une période du débit binaire du train de données reçu.

Le circuit comporte à cet effet un circuit de récupération 30 du rythme à 160 k Hz du train de données binaires reçues appliqué à l'entrée 1 du dispositif suivi d'un diviseur par quarante ou quarante et un 31 délivrant les signaux d'horloge $H'_1$ et $H'_2$, l'un $H'_1$ directement et l'autre $H'_2$ par l'intermédiaire d'un circuit à retard formé d'une bascule de type D 310 cadencée par le signal de rythme à 160 k Hz fourni par le circuit de récupération de rythme 30.

Le registre à décalage a chacune de ses deux parties subdivisées en deux.

La première partie du registre à décalage présente deux éléments 32, 33 en parallèle chacun à quatre étages de registre à entrée de données série, entrées parallèles de prépositionnement et sorties parallèles, dont les entrées de commande de prépositionnement sont mises en parallèle et dont les entrées d'horloge sont cadencées pour l'un 32 par le signal d'horloge $H'_1$ et pour l'autre 33 par le signal d'horloge $H'_2$.

La deuxième partie du registre à décalage présente deux éléments 42, 43 en parallèle chacun à quatre étages de registre à entrée de données série et sorties parallèles.

En variante, non illustrée, l'entrée de prépositionnement du premier étage de chacun des deux éléments 32 et 33 de la première partie du registre à décalage sera connectée à l'entrée 1 du dispositif, en parallèle avec les entrées série des quatre éléments 32, 33, 42, 43, les sorties des derniers étages des deux éléments 42 et 43 de la deuxième partie du registre à décalage n'étant plus alors utilisées.

Le premier élément 42 de la deuxième partie du registre à décalage a les sorties parallèles de ses étages connectées aux entrées de prépositionnement des étages de registre de rangs immédiatement supérieurs du premier élément 32 de la première partie du registre à décalage à l'exception de la dernière sortie qui est connectée à la première entrée. Il reçoit le signal d'horloge $H'_2$ en retard d'une période de rythme du train de données reçues par rapport à celui $H'_1$ appliqué au premier élément 32 de la première partie du registre à décalage. Avec ce premier élément 32, il permet de rechercher dans les trames du train binaire reçu les éléments du sous motif 1001 du mot de verrouillage.

Le deuxième élément 43 de la deuxième partie du registre à décalage a les sorties parallèles de ses étages de registre connectées aux entrées de prépositionnement des étages de registre de rangs immédiatement supérieurs du deuxième élément 33 de la première partie du registre à décalage à l'exception de la dernière sortie qui est connectée à la première entrée. Il reçoit un signal d'horloge en retard d'une période de rythme du train de données reçues sur celui $H'_2$ appliqué au deuxième élément 33 de la première partie du registre à décalage, ce signal d'horloge reçu par le deuxième élément 43 étant obtenu à partir du signal d'horloge $H'_2$ au moyen d'un circuit à retard formé d'une bascule de type D 311 cadencée par le rythme récupéré à 160 k Hz. Avec le deuxième élément 33, il permet de rechercher dans les trames du train binaire reçu les éléments du sous motif x 1 y 0 du mot de verrouillage.

Le diviseur par quarante ou quarante et un 31 présente une entrée de choix de la valeur quarante ou quarante et un avec laquelle il opère, au niveau logique 1 lorsque la division se fait par quarante et un et au niveau logique 0 lorsqu'elle se fait par quarante. Cette entrée de choix est contrôlée par un circuit de commande de déphasage 34 de même constitution que celui 25 de la figure précédente à l'exception du compteur-diviseur 340 qui est un compteur-diviseur par quatre et non par huit et du décodeur 341 qui est constitué d'une porte logique de type « et » à deux entrées décodant l'état trois du compteur-diviseur 340 pour délivrer un signal à 1 k Hz définissant le rythme de répétition des commandes de déphasage en l'absence de reconnaissance du mot de verrouillage trame. Le circuit de commande de déphasage 34 contrôle également le choix du chargement parallèle ou série des deux éléments 32 et 33 de la première partie du registre à décalage dont les entrées de commande de prépositionnement reçoivent du circuit 34 le même signal que l'entrée de choix de la valeur de division du diviseur 31.

Le décodeur 35 est constitué, comme précédemment le décodeur 24, d'une porte logique de type « et » à plusieurs entrées dont certaines sont précédées d'inverseurs. Mais ces entrées sont au nombre de six qui est celui des bits du nouveau mot de verrouillage considéré et les sorties parallèles des premiers éléments 32, 33 de la première partie du registre à décalage n'ont plus des rangs en correspondance directement inverse avec ceux des bits du mot de verrouillage trame qu'elles permettent de retrouver, les premier, deuxième, quatrième et cinquième bits du mot de verrouillage trame se retrouvant respectivement sur les quatrième, troisième, deuxième et première sorties du premier élément 32 de la première partie du registre à décalage, et les troisième et sixième bits du mot de verrouillage de trame se retrouvant respectivement sur la troisième et la première sorties du deuxième élément 33 de la première partie du registre à décalage.

Le fonctionnement est tout à fait analogue à celui du dispositif précédemment décrit relativement à la figure 2.

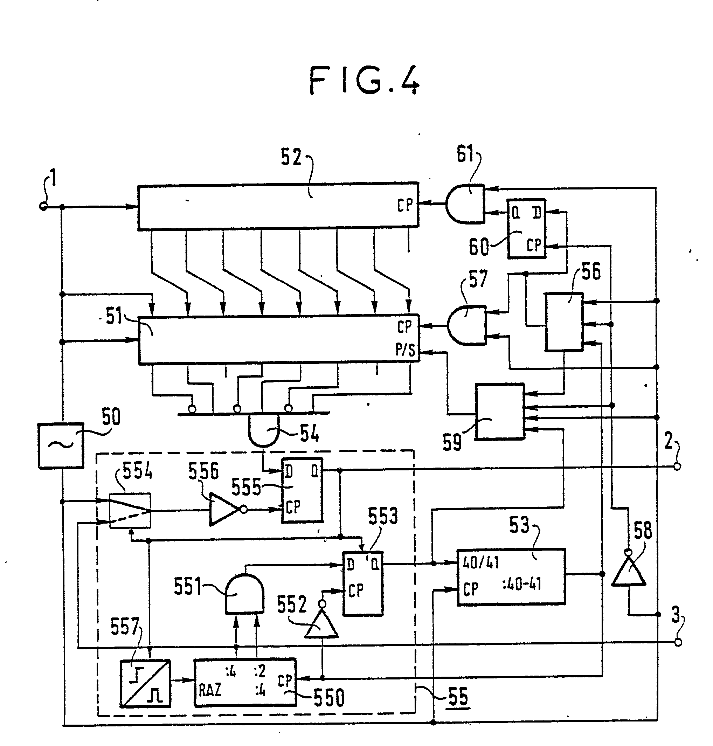

La figure 4 représente une autre adaptation du dispositif de synchronisation de la figure 2 à un système de transmission utilisant un train de données isochrones à 160 k bits/s organisé en trames constituées chacune de quatre secteurs de quarante bits avec, comme dans le cas précédent, un mot de verrouillage de six bits 101010 répartis en un bit de valeur 1 en tête du premier secteur, un groupe de deux bits de valeur 01 en tête du deuxième secteur, un bit de valeur 0 en tête du troisième secteur et un groupe de deux bits de valeur 10 en tête du quatrième secteur.

Comme précédemment, on obtient le motif dont est tiré le signal d'horloge du registre à décalage en complétant le mot de verrouillage de manière à le transformer en quatre groupes de deux bits régulièrement répartis dans une trame : 1 x 010 y 10, x et y étant les données figurant en deuxième position respectivement dans les premier et troisième secteurs. Par contre on considère le motif dans son entier et l'on engendre un signal d'horloge par sélection des périodes du signal de rythme des données reproduisant ce motif c'est-à-dire par une sélection de deux périodes consécutives du signal de rythme des données répétée a une cadence de 4 k Hz.

Le circuit utilisé diffère peu de celui de la figure 2. Il comporte comme celui-ci un circuit de récupération 50 du rythme à 160 k Hz du train de données reçues appliqué a l'entrée 1 du circuit, un registre à décalage à deux parties parallèles 51, 52 recevant le train de données reçues, des moyens de cadencement avec des moyens de déphasage incorporés comportant un diviseur par quarante ou quarante et un 53, un décodeur de mot de verrouillage formé d'une porte logique de type « et » 54 à six entrées qui sont reliées à des sorties parallèles de la partie 51 du registre à décalage et dont certaines sont munies d'inverseurs tenant compte de la valeur 0 de certains bits du mot de verrouillage et un circuit de commande de déphasage 55 des signaux d'horloge du registre à décalage déterminant le choix de la valeur quarante ou quarante et un avec laquelle le diviseur 53 opère.

Le diviseur par quarante ou quarante et un présente une entrée de choix de la valeur avec laquelle il opère, au niveau logique 1 lorsque la division se fait par quarante et un et au niveau logique 0 lorsqu'elle se fait par quarante. Cette entrée de choix est contrôlée par le circuit de commande de déphasage 55 de même constitution que celui 25 du circuit de la figure 2 à l'exception du compteur-diviseur 550 qui est un compteur-diviseur par quatre et non par huit et du décodeur 551 qui est constitué d'une porte logique de type « et » à deux entrées décodant l'état trois du compteur-diviseur 550 pour délivrer un signal à 1 k Hz définissant le rythme de répétition des commandes de déphasage en l'absence de reconnaissance de mot de synchronisation de trame.

Les deux parties 51, 52 du registre à décalage sont identiques à celles 21, 22 du registre à décalage du circuit de la figure 2 et ont les mêmes interconnexions, à ceci près que l'entrée de prépositionnement du premier étage de la première partie 51, qui peut être connectée soit à la sortie du dernier étage de la deuxième partie 52 soit en parallèle avec les entrées série des deux parties 51 et 52, a été représentée ici connectée en parallèle avec ces entrées série, mais elles ne sont pas cadencées de la même manière.

La première partie 51 a son entrée d'horloge connectée à la sortie du diviseur par quarante ou quarante et un 53 par l'intermédiaire d'un premier circuit générateur de paires d'impulsions laissant passer la première et la deuxième période du signal de rythme des données reçues survenant après chaque front montant du signal à 4 k Hz délivré par le diviseur 53.

Ce premier circuit générateur de paires d'impulsions comporte un circuit 56 recevant le signal à 4 k Hz délivré par le diviseur 53 ainsi que, d'une part directement et d'autre part à travers un inverseur 58, le signal de rythme des données reçues délivré par le circuit 50 pour engendrer à la suite de chaque front montant du signal à 4 k Hz délivré par le diviseur 53 un créneau au niveau logique 1 débutant une demi-période du signal de rythme des données reçues après ce front montant et s'étendant sur une durée égale à celle de deux périodes du signal de rythme des données reçues, et une porte logique de type « et » 57 commandée par ce circuit 56 et recevant par ailleurs le signal de rythme des données reçues. Cette première partie 51 a en outre sa commande de prépositionnement P/S connectée à la sortie Q de la première bascule de type D 553 du circuit de commande de déphasage 55 par l'intermédiaire d'un circuit 59 maintenant un niveau logique 0 sur l'entrée de commande de prépositionnement P/S pendant la deuxième impulsion de chaque paire engendrée par le premier circuit générateur de paires d'impulsions.

La deuxième partie 52 du registre à décalage a son entrée d'horloge connectée à la sortie du diviseur 53 par l'intermédiaire d'un second générateur de paires d'impulsions laissant passer la deuxième et la troisième période du signal de rythme des données après chaque front montant du signal délivré par le diviseur 53.

Ce second circuit générateur de paires d'impulsions comporte le circuit 56, qui est donc commun aux deux circuits générateurs de paires d'impulsions, une bascule de type D 60 cadencée par le signal de rythme des données reçues préalablement inversé par l'inverseur 58 et dont l'entrée D est connectée à la sortie du circuit 56, retardant ainsi de la durée d'une période du signal de rythme des données reçues les créneaux engendrés par le circuit 56, et une porte logique de type « et » 61 commandée par le signal sur la sortie Q de la bascule 80 et recevant par ailleurs le signal de rythme des données reçues.

Le décodeur est constitué par une porte logique de type « et » 54 dont les six entrées sont connectées aux première, deuxième, quatrième, cinquième, sixième et huitième sorties parallèles de la première partie du registre à décalage sur lesquelles se retrouvent les bits du mot de verrouillage dans un ordre directement inverse. Les troisième et septième sorties sont ignorées car elles correspondent aux éléments y et x ayant servi à compléter le mot de synchronisation pour obtenir un motif régulier.

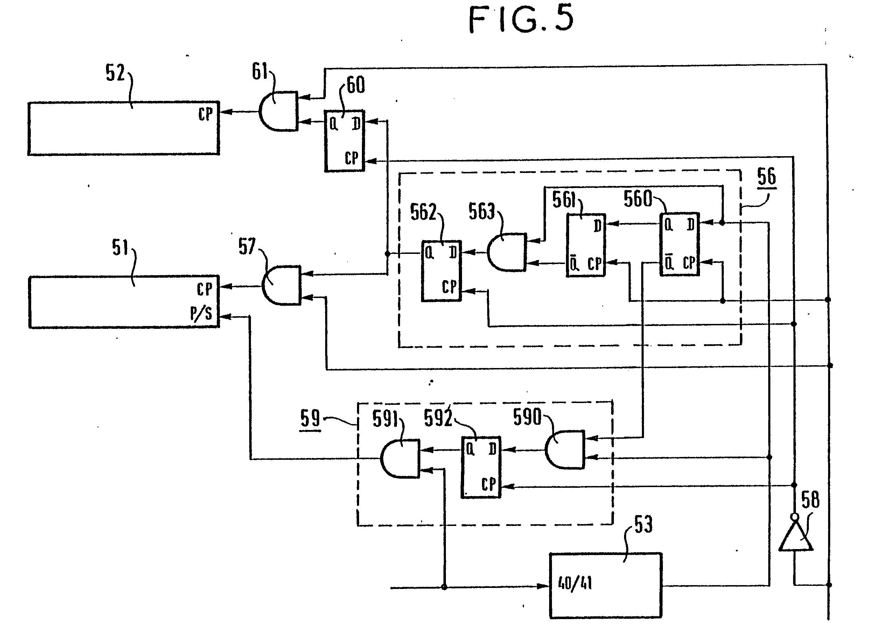

La figure 5 détaille un mode de réalisation des circuits 56 et 59. Le circuit 56 comporte trois bascules de type D, 560, 561 et 562, à déclenchement sur·front montant et une porte logique de type « et » 563. La première et la seconde bascule, 560 et 561, sont montées en série et cadencées par le signal de rythme des données reçues, la première, 560, recevant sur son entrée D le signal à 4 k Hz délivré par le diviseur 53 ; elles retardent globalement le signal à 4 k Hz délivré par le diviseur 53 d'une durée égale à deux périodes du signal de rythme des données reçues. La porte 563 a deux entrées connectées l'une à la sortie du diviseur 53 et l'autre à la sortie $\overline{Q}$ de la bascule 561 ; elle engendre à chaque front montant du signal à 4 k Hz délivré par le diviseur 53 un créneau au niveau logique 1 débutant sur ce front montant et s'étendant sur deux périodes du signal de rythme des données reçues. La troisième bascule, 562, dont la sortie Q constitue la sortie du circuit 56, est cadencée par le signal de rythme des données reçues préalablement inversé par l'inverseur 58 et a son entrée D connectée à la sortie de la porte 563 ; elle retarde les créneaux engendrés par cette porte d'une demi-période du signal de rythme des données reçues.

Le circuit 59 comporte deux portes logiques de type « et » 590 et 591 et une bascule de type D 592 à déclenchement sur front montant. La première porte de type « et », 590, a deux entrées connectées l'une à la sortie du diviseur 53 et l'autre à la sortie $\overline{Q}$ de la bascule 560 du circuit 56 ; elle engendre à chaque front montant du signal à 4 k Hz délivré par le diviseur 53 un créneau au niveau logique 1 débutant sur ce front montant et s'étendant sur une période du signal de rythme des données reçues. La bascule 592, cadencée par le signal de rythme des données reçues préalablement inversé par l'inverseur 58, a son entrée D connectée à la sortie de la porte 590 ; elle retarde les créneaux engendrés par cette porte d'une demi-période du signal de rythme des données reçues. La deuxième porte de type « et », 591, dont la sortie constitue celle du circuit 59, a deux entrées connectées l'une à la sortie Q de la bascule 592 et l'autre à la sortie du circuit de commande de déphasage 55 connectée à l'entrée de choix de la valeur de division du diviseur 53 ; en présence d'une commande de déphasage qui constitue également une commande de prépositionnement pour la première partie 51 du registre à décalage, cette porte 591 laisse passer vers l'entrée de commande de prépositionnement P/S de cette première partie 51 le créneau alors délivré par la bascule 592, créneau qui débute une demi-période du signal de rythme des données reçues avant la première impulsion de la paire d'impulsions alors engendrées par le premier circuit générateur de paire d'impulsions et se termine en même temps que cette première impulsion ; la première partie 51 du registre à décalage n'est ainsi prépositionnée que lors de cette première impulsion ; en l'absence de commande de prépositionnement, la porte 591 maintient un niveau logique 0 sur l'entrée de commande de prépositionnement P/S de la première partie 51 du registre à décalage.

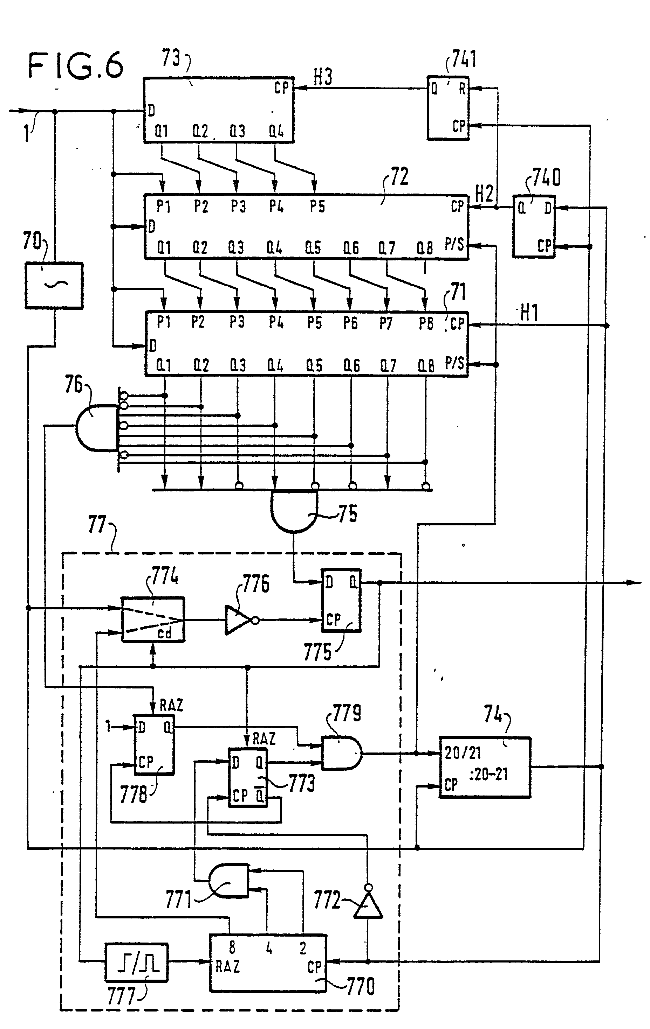

La figure 6 montre le schéma d'un dispositif de synchronisation de trames plus rapide que les précédents, prévu pour un système de transmission de données binaires dans lequel les données sont transmises sous la forme d'un train isochrone à 160 Kbits/s organisé en trames constituées chacune de huit secteurs de vingt bits avec un mot de verrouillage de huit bits uniformément réparti ayant la valeur binaire 11010010 et occupant le premier emplacement de chaque secteur.

Le dispositif comporte un circuit de récupération 70 du rythme à 160 kHz du train de données appliqué à l'entrée 1 du dispositif, un registre à décalage à trois parties parallèles 71, 72, 73 recevant le train de données reçues, des moyens de cadencement avec des moyens de déphasage incorporés comportant un diviseur par vingt ou vingt et un 74 qui opère sur le rythme à 160 kHz délivré par le circuit de récupération de rythme 70 et qui est à l'origine des signaux d'horloge fournis aux trois parties 71, 72, 73 du registre à décalage, un décodeur de mot de verrouillage formé d'une porte logique de type « et » 75 à huit entrées qui sont reliées aux sorties parallèles de la première partie à huit étages 71 du registre à décalage et dont certaines sont munies d'inverseurs pour tenir compte de la valeur 0 de certains bits du mot de verrouillage, un circuit de prédiction formé d'une porte logique de type « et » 76 à huit entrées qui sont reliées aux sorties parallèles de la première partie à huit étages 71 du registre à décalage et dont certaines entrées sont munies d'inverseurs pour tenir compte de la valeur 0 de certains bits de la version permutée du mot de verrouillage qui est obtenue par une rotation de la moitié des bits de ce dernier, et un circuit de commande de déphasage 77 des signaux d'horloge du registre à décalage déterminant en fonction des signaux de sortie du décodeur et du circuit de prédiction le choix de la valeur vingt ou vingt et un avec laquelle le diviseur opère.

Le circuit de récupération de rythme 70 est formé, de la manière habituelle, au moyen d'un oscillateur pourvu d'une boucle à verrouillage de phase qui le synchronise sur les transitions du train de données reçues appliqué sur l'entrée 1.

Le registre à décalage présente trois parties parallèles 71, 72, 73 du type à propagation sur les fronts montants du signal d'horloge. Elles ont chacune une entrée série sur laquelle est appliqué le train des données reçues disponible sur l'entrée 1 et sont cadencées par des versions déphasées entre elles du signal d'horloge à 8 kHz délivré par le diviseur par vingt ou vingt et un 74.

La première partie 71 du registre à décalage est celle qui renferme la sélection des données en cours d'analyse par le décodeur de mot de verrouillage 75 et par le circuit de prédiction 76. Elle est formée de huit étages de registre pourvus d'entrées parallèles de prépositionnement qui sont reliées aux sorties parallèles des étages de registre de la deuxième partie 72 de rangs immédiatement inférieurs à l'exception de l'entrée parallèle de prépositionnement du premier étage qui est mise en parallèle avec l'entrée série sur l'entrée 1 du dispositif. Cette première partie 71 comporte une entrée de commande de prépositionnement P/S active au niveau logique 1 et contrôlée par le circuit de commande de déphasage 77. Elle reçoit sur son entrée d'horloge CP une première version $H_1$ du signal d'horloge qui est celle délivrée directement par le diviseur par vingt ou vingt et un 74.

La deuxième partie 72 du registre à décalage prépare la sélection de données suivante au cas où la sélection faite dans la première partie 71 ne contiendrait pas de mot de verrouillage. Elle permet un chargement immédiat de tous les étages de la première partie. Sans elle, il faudrait attendre la durée d'une trame à chaque changement de sélection pour que l'ensemble des étages de la première partie 71 soient chargés conformément à la nouvelle sélection. Elle est formée de sept étages de registre mais seuls les cinq premiers d'entre eux sont pourvus d'entrées de prépositionnement qui, de manière analogue à celles de la première partie, sont reliées aux sorties parallèles des étages de registre de la troisième partie 73 de rangs immédiatement inférieurs à l'exception de l'entrée parallèle de prépositionnement du premier étage qui est mise en parallèle avec l'entrée série sur l'entrée 1 du dispositif. Cette deuxième partie comporte une entrée de commande de prépositionnement P/S de ses cinq premiers étages qui est active au niveau logique 1 et connectée en parallèle sur la commande de prépositionnement de la première partie 71. Elle reçoit sur son entrée d'horloge CP une deuxième version $H_2$ du signal d'horloge qui est délivrée par le diviseur par vingt ou vingt et un 74 par l'intermédiaire d'une bascule de type D 740 qui lui impose un retard égal à la durée d'une donnée reçue. Grâce à cela, elle effectue une sélection de données en retard d'un pas dans les trames du train de données par rapport à celle faite par la première partie. Comme le transfert des contenus des étages de la deuxième partie 72 dans les étages de la première partie 71 s'effectue au cours d'un temps d'horloge, il est tenu compte du décalage manqué par un décalage entre les rangs des entrées parallèles de prépositionnement des étages de registre de la première partie 71 et les rangs des sorties parallèles des étages de registre de la deuxième partie qui leur sont connectées.

La deuxième partie 72 du registre à décalage a le même nombre d'étages de registre, à un près, que la première partie. Son chargement complet par son entrée série à chaque nouvelle sélection prendrait comme celui de la première partie une durée de l'ordre de celle d'une trame alors que la durée d'analyse d'une sélection est plus courte de moitié.

La troisième partie 73 permet d'accélérer ce chargement pour le rendre compatible avec la durée d'analyse. Elle est formée de quatre étages de registre avec une entrée série reliée à l'entrée 1 du dispositif et reçoit sur son entrée d'horloge CP une troisième version $H_3$ du signal d'horloge qui est délivrée par le diviseur par vingt ou vingt et un 74 par l'intermédiaire de deux bascules de type D, la bascule 740 et une bascule 741 connectées en cascade qui lui imposent un retard égal à la durée de deux données reçues. Grâce à cela, elle effectue une sélection de données dans les trames du train de données reçu en retard d'un pas par rapport à celle faite par la deuxième partie 72. Son contenu permet la mise à jour immédiate des premiers étages de registre de la deuxième partie 72 diminuant d'autant son temps de chargement par son entrée série.

Le circuit de commande de déphasage 77 comporte :

un compteur diviseur par huit 770 recevant sur son entrée de comptage la première version $H_1$ du signal d'horloge délivré par le diviseur par vingt ou vingt et un 74,

un générateur de rythme de changement de sélection toutes les demi-trames formé d'une porte logique de type « et » 771 à deux entrées connectées aux sorties des deux premiers étages du compteur diviseur par huit 770,

un inverseur de signal d'horloge 772,

une première bascule de type D 773 à déclenchement sur front montant cadencée par le signal d'horloge $H_1$ préalablement complémenté par l'inverseur 772 et dont l'entrée de donnée est connectée à la sortie de la porte logique de type « et » 771,

un circuit d'aiguillage 774 à deux entrées et une sortie, dont l'une des entrées est connectée à la sortie du circuit de récupération du rythme à 160 kHz du train de données et l'autre à la sortie du troisième étage du compteur diviseur par huit 770 fournissant un signal de cadencement C à 1 kHz,

une deuxième bascule de type D 775 à déclenchement sur front montant, cadencée par le signal délivré par le circuit d'aiguillage 774 préalablement complémenté par un inverseur 776, dont l'entrée de donnée D est connectée à la sortie de la porte logique de type « et » 75 constituant le décodeur de mot de verrouillage et dont le signal de sortie Q sert de commande de mise à zéro de la première bascule de type D, de commande d'adressage du circuit d'aiguillage 774 et est utilisé pour engendrer par l'intermédiaire d'un monostable 777 des impulsions de synchronisation appliquées sur l'entrée de mise à zéro du compteur diviseur par huit 770,

une troisième bascule de type D 778 à déclenchement sur front montant, cadencée par le signal de sortie complémentée Q de la première bascule de type D 773 dont l'entrée de données D est mise au niveau logique 1 et dont l'entrée de remise à zéro est commandée par la sortie de la porte logique de type « et » 76 constituant le circuit de prédiction,

et une porte logique de type « et » 779 à deux entrées connectées aux sorties Q des première et troisième bascules de type D 773, 778, qui délivre le signal de sortie du circuit de commande de déphasage.

La deuxième bascule de type D 775 échantillonne le niveau logique de la sortie de la porte logique de type « et » 75 constituant le décodeur de mot de verrouillage soit, lorsque le verrouillage n'est pas effectif, à l'apparition de chaque nouvelle donnée, le signal à 160 kHz du circuit de récupération de rythme lui étant appliqué au travers du circuit d'aiguillage 774 soit, lorsque le verrouillage est effectif, à l'apparition de chaque nouveau mot de verrouillage de trame, le signal à 1 kHz du compteur diviseur 770 synchronisé sur la première détection du mot de verrouillage lui étant appliqué au travers du circuit d'aiguillage dont la commande d'adressage a changé de niveau.

Le monostable 777 qui est sensible au front montant, assure comme on vient de le voir la synchronisation du compteur diviseur par huit 770 avec la première détection du mot de verrouillage.

La première bascule de type D 773 isole avec la porte logique de type « et » 771 les états quatre et zéro du compteur diviseur par huit 770 pendant lesquels peuvent se produire les commandes de déphasage. Cette sélection est inhibée à chaque détection d'un mot de verrouillage par une commande de mise à zéro effectuée par la deuxième bascule de type D 775.

La troisième bascule de type D 778 sert de registre pour mémoriser sur des intervalles de temps successifs qui durent une demi-trame et qui sont déterminés par le compteur diviseur 770, les impulsions engendrées par la porte logique 76 à chaque reconnaissance par le circuit de prédiction de la version du mot de verrouillage obtenue par une rotation de la moitié de ses termes. Elle est initialisée au niveau logique 1 après chaque passage par l'état zéro ou quatre du compteur décompteur 770 par la transition montante du signal de la sortie inversée Q de la première bascule de type D 773 et mise à zéro par la porte logique 76.

La porte logique de type « et » 779 transmet l'impulsion de sortie de la première bascule de type D 773 qui, lorsqu'elle existe, correspond aux états de comptage zéro ou quatre du compteur diviseur 770 en tant que commande de déphasage et de chargement parallèle des première et deuxième parties 71, 72 du registre lorsque la sortie Q de la troisième bascule de type D est restée à 1 traduisant l'absence d'impulsion en sortie de la porte logique 76 constituant le circuit de prédiction.

Le fonctionnement général du circuit de synchronisation est le suivant :

A tout moment, trois sélections distinctes de données défilent ou commencent à défiler dans les trois parties 71, 72, 73 du registre à décalage, la première partie 71 étant remplie constamment des données appartenant à une même sélection soumise à l'analyse du circuit de prédiction et du décodeur de mot de verrouillage, la deuxième et la troisième parties 72, 73 nécessitant elles quatre périodes du signal d'horloge à 8 kHz à chaque changement de sélection pour être remplies de données appartenant à une même sélection.

Chaque fois que le compteur diviseur 770 passe par les états zéro ou quatre, le circuit de commande de déphasage engendre un ordre de déphasage entraînant un changement de sélection à moins qu'il en ait été empêché par le décodeur ou le circuit de prédiction ayant détecté dans l'intervalle le mot de verrouillage ou sa version permutée.

Si une nouvelle sélection n'est pas correcte, c'est-à-dire ne permet pas d'isoler le mot de verrouillage, tout nouvel état zéro ou quatre du compteur diviseur 770 provoque une impulsion en sortie de la première bascule 773 qui est transmise en tant qu'ordre de déphasage ou de changement de sélection par la porte logique 779 maintenue passante par un niveau logique 1 en sortie de la troisième bascule.

Si la nouvelle sélection est correcte, deux évènements peuvent se produire pendant les quatre premiers décalages :

1. Le mot de verrouillage apparaît. Il provoque alors un niveau logique 0 en sortie de la porte logique 75 constituant le décodeur de mot de verrouillage qui est immédiatement transmis sur la sortie de détection du mot de verrouillage trame VT par la deuxième bascule 775, bloque toute commande ultérieure de déphasage par la mise à zéro de la première bascule 773 et prépare la détection du mot de verrouillage de la trame suivante par une mise a zéro du compteur diviseur 770 et par l'adoption d'une cadence d'horloge de 1 kHz au lieu de 160 kHz.

2. Le mot de verrouillage n'apparaît pas mais devrait àpparaître au cours des quatre décalages suivants. Dans ce cas, la version permutée du mot de verrouillage résultant d'une rotation de quatre de ses éléments apparaît nécessairement et provoque une impulsion en sortie de la porte logique 76 constituant le circuit de prédiction. Cette impulsion remet la troisième bascule 778 à zéro bloquant la porte logique 779 et empêchant l'émission de la prochaine commande de déphasage. La même sélection est donc conservée après le quatrième décalage pour les quatre décalages suivants au cours desquels le mot de verrouillage apparaît nécessairement ce qui ramène au premier cas.

Le dispositif qui vient d'être décrit est prévu pour une synchronisation sur un mot de verrouillage ayant un nombre d'éléments n pairs et utilise un circuit de prédiction décodant une version du mot de verrouillage ayant subi une rotation de n/2 éléments. Il est bien évident qu'il peut être adapté à une synchronisation sur un mot de verrouillage ayant un nombre impair d'éléments. Il utiliserait alors un circuit de prédiction décodant une version du mot de verrouillage ayant subi une rotation de $(n + 1)/2$ ou $(n - 1)/2$ éléments avec une durée minimum d'analyse de chaque sélection correspondant au défilement de $(n + 1)/2$ termes du mot de verrouillage toujours supposé à bits régulièrement répartis dans une trame. On peut choisir de manière plus générale un circuit de prédiction décodant une version du mot de verrouillage ayant subi une rotation de p éléments avec une durée minimum d'analyse de chaque sélection correspondant au défilement du plus important des nombres de termes p ou $n - p$ du mot de verrouillage.

Dans les exemples de dispositifs de synchronisation décrits, le saut de phase que fait effectuer le diviseur à valeur de division variable au signal d'horloge qu'il délivre retarde ce signal d'horloge. On pourrait prévoir d'imposer un saut de phase qui avance ce signal d'horloge : dans le cas où les sélections de données se font de manière imbriquée avec un registre à décalage en deux parties, les entrées de prépositionnement de la première partie du registre à décalage seraient alors connectées aux sorties parallèles des étages de la deuxième partie de rangs immédiatement supérieurs à l'exception de l'entrée du dernier étage qui serait connectée à la sortie du premier étage de la deuxième partie, et la version du signal d'horloge cadençant cette deuxième partie serait en avance sur celle cadençant la première ; dans ce même cas, on serait toutefois conduit à des réalisations plus complexes car le transfert vers la première partie du registre à décalage des données mémorisées dans la deuxième partie s'effectuerait non juste après chaque saut de phase du signal d'horloge, mais juste avant, la reconnaissance d'un mot de verrouillage par le décodeur pourrait donc intervenir soit lorsque c'est la version du signal d'horloge cadençant la deuxième partie du registre à décalage qui a la bonne phase, soit lorsque c'est celle cadençant la première partie qui l'a ; un circuit de levée de doute serait donc nécessaire.

Dans les deux exemples de dispositifs de synchronisation décrits relativement aux figures 3 et 4, on a adopté, pour définir le signal d'horloge du registre à décalage, le motif minimal permettant d'obtenir à partir du mot de verrouillage trame un ensemble de groupes de bits de même importance, régulièrement répartis dans la trame. Dans certains cas d'application, il peut être avantageux d'adopter un motif non minimal présentant des groupes de bits sans recouvrement avec les bits du mot de synchronisation dans le but d'augmenter la périodicité du motif et de diminuer ainsi le nombre maximal de sauts de phase unitaires à effectuer pour obtenir une sélection correcte. Ainsi, dans le cas précédent, où le motif adopté comportait quatre groupes de deux bits uniformément repartis dans les 160 bits d'une trame, le nombre maximal de sauts de phase únitaires à effectuer pour obtenir une sélection correcte est de trente neuf. Si l'on complète ce motif par quatre autres groupes de deux bits régulièrement répartis avec les quatre précédents dans une trame, le motif présentera un groupe de deux bits tous les vingt bits de trame et le nombre maximal de sauts unitaires de phase à effectuer pour obtenir une sélection correcte ne sera plus que de dix neuf. En contre partie, le doublement de la longueur du motif obligera au doublement de la longueur du registre à décalage.

## Revendications

1. Dispositif de synchronisation de trame dans un système de transmission de données binaires dans lequel les données sont transmises sous la forme d'un train isochrone organisé en trames pourvues chacune d'un mot de verrouillage à bits répartis au sein de la trame, caractérisé en ce qu'il comporte :

des moyens de cadencement (10, 12) engendrant un signal d'horloge à partir d'une sélection des périodes du signal de rythme du train de données reproduisant un motif périodique formé par des emplacements relatifs de bits sur la durée d'une trame dont au moins certains sont distribués conformément à la répartition des bits du mot de verrouillage au sein d'une trame et qui forment n groupes de q éléments, n et q étant des nombres entiers, régulièrement répartis sur la durée d'une trame,

des moyens de déphasage permettant sur ordre, de faire effectuer au signal d'horloge un saut de phase au moins égal à une période du signal de rythme du train de données,

un registre à décalage à entrée série et sorties parallèles (11) avec un nombre d'étages au moins égal à celui n. q des emplacements de données retenus dans un motif, qui est cadencé par le signal d'horloge lui parvenant des moyens de cadencement et de déphasage (10, 12) et sur l'entrée duquel est appliqué le train de données,

un décodeur de mot de verrouillage (13) à entrées parallèles connectées aux sorties du registre à décalage correspondant à la répartition relative des bits du mot de verrouillage dans un motif et

des moyens de commande de déphasage (14) délivrant un ordre de déphasage à l'intention des moyens de déphasage lorsque le décodeur (13) n'a pas reconnu de mots de verrouillage parmi les données mémorisées dans le registre à décalage (11) sur une durée minimale de deux mots de verrouillage consécutifs.

2. Dispositif de synchronisation de trame dans un système de transmission de données binaires dans lequel les données sont transmises sous forme d'un train isochrone organisé en trames pourvues chacune d'un mot de verrouillage à bits répartis au sein de la trame, caractérisé en ce qu'il comporte :

des moyens de cadencement (20, 23) engendrpant un' signal d'horloge à partir d'une sélection des périodes du signal de rythme du train de données reproduisant un motif périodique formé par des emplacements relatifs de bits sur la durée d'une trame dont au moins certains sont distribués conformément à la répartition des bits du mot de verrouillage au sein d'une trame et qui forment n groupes de q éléments, n.et q étant des nombres entiers, régulièrement répartis sur la durée d'une trame,

des moyens de déphasage permettant, sur ordre, de faire effectuer au signal d'horloge un saut de phase au moins égal à une période du signal de rythme du train de données,

un registre à décalage formé de deux parties parallèles (21, 22) à entrée série et sorties parallèles qui sont cadencées par deux versions déphasées entre elles du signal d'horloge et qui reçoivent en parallèle le train de données, la première partie (21) étant cadencée par une première version du signal d'horloge, constituée d'une suite d'étages à entrées de prépositionnement en nombre égal à celui n. q des emplacements de données retenus dans le motif, et pourvue d'une commande de prépositionnement (P/S) contrôlée par des moyens de commande de déphasage (25), la deuxième partie (22) étant cadencée par une deuxième version du signal d'horloge déphasée par rapport à la première d'une valeur égale au saut de phase engendré en une fois par les moyens de déphasage et constituée d'une suite d'étages en nombre au moins égal à celui n. q-1 des emplacements de données retenus dans le motif diminué d'une unité, dont les sorties parallèles sont connectées aux entrées de prépositionnement des étages de la première partie (21),

un décodeur de mot de verrouillage (24) à entrées parallèles connectées aux sorties de la première partie (21) du registre à décalage correspondant à la répartition relative dans un motif des bits du mot de verrouillage et

lesdits moyens de commande de déphasage (25) délivrant un ordre de déphasage à l'intention des moyens de déphasage et un ordre de chargement parallèle à l'intention de la première partie (21) du registre à décalage lorsque le décodeur (24) n'a pas reconnu de mots de verrouillage parmi les données mémorisées dans le registre à décalage sur une durée minimale d'un mot de verrouillage.

3. Dispositif selon la revendication 2, caractérisé en ce que ledit saut de phase retarde ledit signal d'horloge et en ce que les entrées de prépositionnement des étages de la première partie (21) du registre à décalage sont connectées aux sorties parallèles des étages dé rangs immédiatement inférieurs de la deuxième partie (22) du registre à décalage à l'exception de la première entrée qui est connectée à la sortie du dernier étage de la deuxième partie (22) du registre à décalage.

4. Dispositif de synchronisation de trame dans un système de transmission de données binaires dans lequel les données sont transmises sous forme d'un train isochrone organisé en trames pourvues chacune d'un mot de verrouillage à bits répartis au sein de la trame, caractérisé en ce qu'il comporte :

des moyens de cadencement (50, 53, 56, 57) engendrant un signal d'horloge à partir d'une sélection des périodes du signal de rythme du train de données reproduisant un motif périodique formé par des emplacements relatifs de bits sur la durée d'une trame dont au moins certains sont distribués conformément à la répartition des bits du mot de verrouillage au sein d'une trame et qui forment n groupes de q éléments, n et q étant des nombres entiers, régulièrement repartis sur la durée d'une trame,

des moyens de déphasage permettant, sur ordre, de faire effectuer au signal d'horloge un saut de phase au moins égal à une période du signal de rythme du train de données et retardant ce signal d'horloge,

un registre à décalage formé de deux parties parallèles (51, 52) à entrée série et sorties parallèles qui sont cadencées par deux versions déphasées entre elles du signal d'horloge et qui reçoivent en parallèle le train de données, la première partie (51) étant cadencée par une première version du signal d'horloge, constituée d'une suite d'étages à entrées de prépositionnement en nombre égal à celui n, q des emplacements de données, retenus dans le motif et pourvue d'une commande de prépositionnement (P/S) contrôlée par des moyens de commande de déphasage (55), la deuxième partie (52) étant cadencée par une deuxième version du signal d'horloge déphasée par rapport à la première d'une valeur égale au saut de phase engendré en une fois par les moyens de déphasage et constituée d'une suite d'étages en nombre au moins égal à celui n. q-1 des emplacements de données retenus dans le motif diminué d'une unité, dont les sorties parallèles sont connectées aux entrées de prépositionnement des étages de la première partie (51) de rangs immédiatement supérieurs, l'entrée de prépositionnement du premier étage de la première partie étant connectée en parallèle avec les entrées série des première et deuxième parties,

un décodeur de mot de verrouillage (54) à entrées parallèles connectées aux sorties de la première partie (51) du registre à décalage correspondant à la répartition relative dans un motif des bits du mot de verrouillage et

lesdits moyens de commande de déphasage (55) délivrant un ordre de déphasage à l'intention des moyens de déphasage et un ordre de chargement parallèle à l'intention de la première partie (51) du registre à décalage lorsque le décodeur (54) n'a pas reconnu de mots de verrouillage parmi les données mémorisées dans le registre à décalage sur une durée minimale d'un mot de verrouillage.

5. Dispositif de synchronisation de trame dans un système de transmission de données binaires dans lequel les données sont transmises sous forme d'un train isochrone organisé en trames pourvues chacune d'un mot de verrouillage à bits répartis au sein de la trame caractérisé en ce qu'il comporte :

des moyens de cadencement (70, 74) engendrant un signal d'horloge à partir d'une sélection des périodes du signal de rythme du train de données reproduisant un motif périodique formé par des emplacements relatifs de bits sur la durée d'une trame dont au moins certains sont distribués conformément à la répartition des bits du mot de verrouillage au sein d'une trame et qui forment n groupes de q éléments, n et q étant des nombres entiers, régulièrement répartis sur la durée d'une trame,

des moyens de déphasage permettant sur ordre de faire effectuer au signal d'horloge un saut de phase d'une valeur au moins égale à une période du signal de rythme du train de données,

un décodeur de mot de verrouillage (75) à entrées parallèles,

un circuit de prédiction (76) constitué d'un décodeur à entrées parallèles identifiant une version du mot de verrouillage ayant subi une rotation correspondant à p groupes d'emplacements relatifs de bits du motif, p étant un entier compris entre 1 et n-1,

un registre à décalage formé de trois parties (71, 72, 73) recevant en parallèle le train de données ; une première partie (71) cadencée par une première version ($H_1$) du signal d'horloge, constituée d'une suite d'étages de registre en nombre au moins égal à celui n. q des emplacements de bits retenus dans un motif avec des entrées parallèles de prépositionnement pour tous les étages et des sorties parallèles connectées aux entrées parallèles du décodeur (75) et du circuit de prédiction (76) , ladite première partie étant pourvue d'une commande de prépositionnement (P/S) contrôlée par des moyens de commande de déphasage (77) ; une deuxième partie (72) cadencée par une deuxième version ($H_2$) du signal d'horloge déphasée par rapport à la première ($H_1$) d'une valeur égale au saut de phase engendré en une fois par les moyens de déphasage, constituée d'une suite d'étages de registre à sorties parallèles en nombre au moins égal à celui nq - 1 des emplacements de bits retenus dans un motif diminué d'une unité, suite dont les sorties parallèles sont connectées aux entrées parallèles de prépositionnement de rangs immédiatement supérieurs de la première partie (71) et dont au moins les r. q premiers étages, r étant le plus grand des nombres p et n-p, possèdent des entrées parallèles de prépositionnement, ladite deuxième partie (72) étant pourvue d'une commande de prépositionnement partiel (P/S) contrôlée par les moyens de commande de déphasage (77) ; et une troisième partie (73) cadencée par une troisième version ($H_3$) du signal d'horloge déphasée par rapport à la deuxième ($H_2$) et respectivement la première version ($H_1$) d'une valeur égale à celle d'un saut de phase et respectivement deux sauts de phase engendrés en une fois par les moyens de déphasage, ladite troisième partie (73) ayant des étages de registre en nombre inférieur d'une unité à celui r. q des entrées parallèles de prépositionnement de la deuxième partie (72) dont les sorties parallèles sont connectées aux entrées parallèles de prépositionnement de rangs immédiatement supérieurs de la deuxième partie (72)

et lesdits moyens de commande de déphasage (77) délivrant un ordre de déphasage à l'intention des moyens de déphasage et un ordre de prépositionnement à l'intention des première et deuxième parties (71, 72) du registre à décalage lorsque ni le décodeur (75) ni le circuit de prédiction (76) n'ont reconnu de mot de verrouillage ou de version permutée de mot de verrouillage dans la première partie (71) du registre à décalage sur une durée minimale correspondant au défilement de r groupes d'emplacements de bits d'un motif.

## Claims

1. A frame synchronization device in a binary data transmission system in which the data is transmitted in the form of an isochronous bit stream organized into frames each provided with an alignment word with bits distributed within the frame, characterized in that it comprises :

timing means (10, 12) generating a clock signal from a selection of periods of the timing signal of the data bit stream reproducing a periodic pattern formed by relative bit locations over the duration of a frame, certain at least of which are distributed according to the distribution of the bits of the alignment word within a frame and which form n groups of q elements (where n and q are integers) regularly distributed over the duration of a frame,

phase shifting means for applying on instruction to the clock signal a phase shift with a value equal to at least one period of the data bit stream timing signal,

a serial input parallel output shift register (11) having at least as many stages as the number n. q of data bit locations provided for in a pattern and which is clocked by the clock signal fed to it by the timing and phase shifting means (10, 12), the data bit stream being applied to the input of this register,

a parallel input alignment word decoder (13) connected to the shift register outputs corresponding within a pattern to the relative locations of the bits of an alignment word, and

phase shifting control means (14) delivering a phase shifting instruction to the phase shifting means when the decoder (13) has not recognized the alignment word in the data bits memorized in the shift register (11) over a minimum period of two consecutive alignment word durations.

2. A frame synchronization device in a binary data transmission system in which the data is transmitted in the form of an isochronous bit stream organized into frames each provided with an alignment word with bits distributed within the frame, characterized in that it comprises :

timing means (20, 23) generating a clock signal from a selection of periods of the timing signal of the data bit stream reproducing a periodic pattern formed by relative bit locations over the duration of a frame, certain at least of which are distributed according to the distribution of the bits of the alignment word within a frame and which form n groups of q elements (where n and q are integers) regularly distributed over the duration of a frame,

phase shifting means for applying on instruction to the clock signal a phase skip with a value equal to at least one period of the data bit stream timing signal,

a shift register formed of two parallel parts (21, 22) with serial inputs and parallel outputs which are clocked by two versions of the clock signal with a relative phase shift between them and which receive in parallel the data bit stream, the first part (21) being clocked by a first version of the clock signal and consisting of a series of stages with presetting inputs equal in number to the number n. q of data bit locations in the pattern, and provided with a presetting control input (P/S) controlled by phase shifting control means (25), the second part (22) being clocked by a second version of the clock signal phase shifted relative to the first by an amount equal to the phase skip generated at one time by the phase shifting means and consisting of a series of stages the number of which is at least equal to the number n. q of data bit locations provided for in the pattern less one, the parallel outputs of which are connected to the presetting inputs of the stages of the first part (21),

a parallel input alignment word decoder (24) connected to the outputs of the first part (21) of the shift register corresponding within a pattern to the relative distribution of the bits of an alignment word, and

phase shifting control means (25) delivering a phase shifting instruction to the phase shifting means and a parallel loading instruction to the first part (21) of the shift register when the decoder (24) has not recognized the alignment word in the data bits memorized in the shift register over a minimum period of one alignment word duration.

3. A device according to claim 2, characterized in that said phase skip delays said clock signal and that the presetting inputs of the first part (21) of the shift register are connected to the parallel outputs of the stages of immediately lower rank of the second part (22) of the shift register with the exception of the first input which is connected to the output of the last stage of the second part (2)) of the shift register.

4. A frame synchronization device in a binary data transmission system in which the data is transmitted in the form of an isochronous bit stream organized into frames each provided with an alignment word with bits distributed within the frame, characterized in that it comprises :

timing means (50, 53, 56, 57) generating a clock signal from a selection of periods of the timing signal of the data bit stream reproducing a periodic pattern formed by relative bit locations over the duration of a frame, certain at least of which are distributed according to the distribution of the bits of the alignment word within a frame and which form n groups of q elements, where n and q are integers, regularly distributed over the duration of a frame,

phase shifting means applying, on instruction, to the clock signal a phase skip with a value equal to at least one period of the data bit stream timing signal and delaying this clock signal,

a shift register formed of two parallel parts (51, 52) with serial inputs and parallel outputs, which are clocked by two versions of the clock signal with a relative phase shift between them and which receive in parallel the data bit stream, the first part (51) being clocked by a first version of the clock signal and consisting of a series of stages with presetting inputs equal in number to the number n. q of data bit locations in the pattern and provided with a presetting command (P/S) controlled by phase shifting control means (55), the second part (52) being clocked by a second version of the clock signal phase shifted relative to the first by an amount equal to the phase skip generated at one time by the phase shifting means and consisting of a series of stages the number of which is at least equal to the number n. q of data bit locations provided for in the pattern less one, the parallel outputs of which are connected to the presetting inputs of the stages of the first part (51) of immediately higher rank, the presetting input of the first stage of the first part being connected in parallel with the serial inputs of the first and second parts,

a parallel input alignment word decoder (54) connected to the shift register outputs of the first part (51) corresponding within a pattern to the relative distribution of the bits of the alignment word, and

said phase shifting control means (55) delivering a phase shifting instruction to the phase shifting means and a parallel loading instruction to the first part (51) of the shift register when the decoder (54) has not recognized the alignment word in the data bits memorized in the shift register over a minimum period of one alignment word duration.

5. A frame synchronization device in a binary data transmission system in which the data is transmitted in the form of an isochronous bit stream organized into frames each provided with an alignment word with bits distributed within the frame, characterized in that it comprises:

timing means (70, 74) generating a clock signal from a selection of periods of the timing signal of the data bit stream reproducing a periodic pattern formed by relative bit locations over the duration of a frame, certain at least of which are distributed according to the distribution of the bits of the alignment word within a frame and which form n groups of q elements, where n and q are integers, regularly distributed over the duration of a frame,

phase shifting means applying, on instruction, to the clock signal a phase skip with a value equal to at least one period of the data bit stream timing signal,

a parallel input alignment word decoder (75),

a prediction circuit (76) consisting of a parallel input decoder identifying a version of the alignment word having been subjected to a rotation corresponding to p groups of relative locations of bits of the pattern where p is an integer between 1 and n - 1,

a shift register formed of three parts (71, 72, 73) receiving in parallel the data bit stream, a first part (71) clocked by a first version (H1) of the clock signal, consisting of a series of register stages the number of which is at least equal to the number n. q of data bit locations provided for in the pattern, with parallel presetting inputs for all the stages and parallel outputs connected to the parallel inputs of the decoder (75) and the prediction circuit (76), said first part being provided with a presetting command (P/S) controlled by phase shifting control means (77), a second part (72) clocked by a second version (H2) of the clock signal phase shifted relative to the first (H1) by an amount equal to the phase skip generated at one time by the phase shifting means, and consisting of a series of register stages with parallel outputs the number of which is at least equal to the number n. q of data bit locations provided for in the pattern less one, the parallel outputs of which series are connected to the parallel presetting inputs of immediately higher rank of the first part (71) and of which at least the first r. q stages, where r is the larger of the numbers p and n-p, have parallel presetting inputs, said second part (72) being provided with a partial presetting command (P/S) controlled by the phase shifting control means (77), and a third part (73) clocked by a third version (H3) of the clock signal phase shifted relative to the second (H2) and first (H1) version respectively by an amount equal to one and two phase skips generated at one time by the phase shifting means, said third part (73) having register stages the number of which is one less than the number r. q of parallel presetting inputs of the second part (72), the parallel outputs of which are connected to the parallel presetting inputs of immediately higher rank of the second part (72), and

said phase shifting control means (77) delivering a phase shifting instruction to the phase shifting means and a presetting instruction to the first and second parts (71, 72) of the shift register when neither the decoder (75) nor the prediction circuit (76) has recognized an alignment word or a permutated version of the alignment word in the first part (71) of the shift register during a minimum period corresponding to the passage of r groups of bit locations of a pattern.

**Patentansprüche**

1. Rahmensynchronisiereinrichtung in einem Binärdatenübertragungssystem bei welchem die Daten in Form einer isochronen Folge von Rahmen übertragen werden, von denen jeder ein im Rahmen verteiltes Verriegelungswort aufweist, dadurch gekennzeichnet, daß sie aufweist:

Taktgabemittel (10, 12) zur Erzeugung eines Taktsignals aus einer Auswahl von Taktsignalperioden der Datenbitfolge, welche ein periodisches Muster aus über die Dauer des Rahmens verteilten relativen Bitplätzen wiedergibt, von denen mindestens bestimmte Plätze entsprechend der Bitverteilung des Verriegelungsworts innerhalb eines Rahmens verteilt sind und die n Gruppen von q Elementen bilden, wobei n und q ganze Zahlen sind und die Gruppen gleichmäßig über die Dauer eines Rahmens verteilt sind,

Phasenschiebemittel, die auf Befehl gestatten, im Taktsignal einen Phasensprung zu bewirken, der mindestens einer Taktsignalperiode der Datenbitfolge entspricht,

ein Schieberegister mit Serieneingang und Parallelausgängen (11), und mit einer Anzahl von Stufen, die mindestens der Anzahl der Datenbitplätze n. q im Muster entspricht, wobei das Schieberegister durch ein Taktsignal getaktet wird, welches ihm von den Taktgabe- und Phasenschiebemitteln (10, 12) zugeführt wird, und an den Eingang des Schieberegisters die Datenbitfolge angelegt ist,

einen Verriegelungswortdecoder (13) mit parallelen Eingängen, welche an die der relativen Verteilung der Bits des Verriegelungsworts im Muster entsprechenden Ausgänge des Schieberegisters angeschlossen sind, und

Mittel (14) zur Steuerung der Phasenverschiebung, welche einen Phasenschiebebefehl an die Phasenschiebemittel richten, wenn der Decoder (13) unter den im Schieberegister (11) gespeicherten Datenbits während einer Dauer von minimal zwei aufeinanderfolgenden Verriegelungswörter keine Verriegelungswörter erkannt hat.

2. Rahmensynchronisiereinrichtung in einem Binärdatenübertragungssystem, bei welchem die Daten in Form einer isochronen Folge von Rahmen übertragen werden, von denen jeder ein im Rahmen verteiltes Verriegelungswort aufweist, dadurch gekennzeichnet, daß sie aufweist :

Taktgabemittel (20, 23) zur Erzeugung eines Taktsignals aus einer Auswahl von Taktsignalperioden der Datenbitfolge, welche ein periodisches Muster aus über die Dauer des Rahmens verteilten relativen Bitplätzen wiedergibt, von denen mindestens bestimmte Plätze entsprechend der Bitverteilung des Verriegelungsworts innerhalb eines Rahmens verteilt sind und die n Gruppen von q Elementen bilden, wobei n und q ganze Zahlen sind und die Gruppen gleichmäßig über die Dauer eines Rahmens verteilt sind,

Phasenschiebemittel, die auf Befehl gestatten, im Taktsignal einen Phasensprung zu bewirken, der mindestens einer Taktsignalperiode der Datenbitfolge entspricht,

ein Schieberegister aus zwei parallelen Teilen (21, 22) mit Serieneingang und Parallelausgängen, die mit zwei gegeneinander phasenverschobenen Taktsignalversionen getaktet werden und parallel die Datenbitfolge empfangen, wobei der erste Teil (21) durch eine erste Version des Taktsignals getaktet wird und aus einer Folge von Stufen mit Voreinstell-Eingängen besteht, deren Anzahl mindestens derjenigen der n. q Datenbitplätze im Muster entspricht, wobei dieser Teil eine Voreinstellsteuerung (P/S) besitzt, welche von Mitteln zur Steuerung der Phasenverschiebung (25) gesteuert wird, während der zweite Teil (22) durch eine zweite Version des Taktsignals getaktet wird, die in der Phase gegen die erste um einen Betrag verschoben ist, der dem in einem Zug durch die Phasenschiebemittel erzeugten Phasensprung entspricht, wobei dieser zweite Teil aus einer Folge von Stufen besteht, deren Anzahl mindestens derjenigen der n. q-1 vorhandenen Datenbitplätze in dem Muster, verkleinert um eine Einheit entspricht, und wobei die Parallelausgänge mit den Voreinstell-Eingängen der Stufen des ersten Teils (21) verbunden sind,

einen Verriegelungswortdecoder (24) mit parallelen Eingängen, welche an die der relativen Verteilung der Bits des Verriegelungsworts im Muster entsprechenden Ausgänge des ersten Teils (21) des Schieberegisters angeschlossen sind, und

die Mittel zur Steuerung der Phasenverschiebung (25), die einen Phasensprung-Befehl an die Phasenschiebemittel und einen Befehl zum parallelen Laden an den ersten Teil (21) des Schieberegisters richten, wenn der Decoder (24) unter den im Schieberegister gespeicherten Datenbits während einer Minimaldauer eines Verriegelungsworts keine Verriegelungswörter erkannt hat.

3. Vorrichtung nach Anspruch 2, dadurch gekennzeichnet, daß der Phasensprung das Taktsignal verzögert und daß die Voreinstelleingänge der Stufen des ersten Teils (21) des Schieberegisters mit den Parallelausgängen der unmittelbar niedrigeren Stufen des zweiten Teils (22) des Schieberegisters verbunden sind, mit Ausnahme des ersten Eingangs, der an den Ausgang der letzten Stufe des zweiten Teils (22) des Schieberegisters angeschlossen ist.

4. Rahmensynchronisiereinrichtung in einem Binärdatenübertragungssystem, bei welchem die Daten in Form einer isochronen Folge von Rahmen übertragen werden, von denen jeder ein im Rahmen verteiltes Verriegelungswort aufweist, dadurch gekennzeichnet, daß sie aufweist :

Taktgabemittel (50, 53, 56, 57) zur Erzeugung eines Taktsignals aus einer Auswahl von Taktsignalperioden der Datenbitfolge, welche ein periodisches Muster aus über die Dauer des Rahmens verteilten relativen Bitplätzen wiedergibt, von denen mindestens bestimmte Plätze entsprechend der Bitverteilung des Verriegelungsworts innerhalb eines Rahmens verteilt sind und die n Gruppen von q Elementen bilden, wobei n und q ganze Zahlen sind und die Gruppen gleichmäßig über die Dauer eines Rahmens verteilt sind,

Phasenschiebemittel, die auf Befehl gestatten, im Taktsignal einen Phasensprung zu bewirken, der mindestens einer Taktsignalperiode der Datenbitfolge entspricht, in dem dieses Taktsignal verzögert wird,

ein Schieberegister aus zwei parallelen Teilen (51, 52) mit Serieneingang und Parallelausgängen, die mit zwei gegeneinander phasenverschobenen Taktsignalversionen getaktet werden und parallel die Datenbitfolge aufnehmen, wobei der erste Teil (51) durch eine erste Version des Taktsignals getaktet wird und aus einer Folge von Stufen mit Voreinstell-Eingängen besteht, deren Anzahl derjenigen der n. q Datenbitplätze im Muster entspricht, und eine Voreinstellsteuerung (P/S) besitzt, welche von Mitteln zur Steuerung der Phasenverschiebung (55) gesteuert wird, während der zweite Teil (52) durch eine zweite Version des Taktsignals getaktet wird, die in der Phase gegen die erste um einen Betrag verschoben ist, der dem in einem Zug durch die Phasenschiebemittel erzeugten Phasensprung entspricht, wobei dieser zweite Teil aus einer Folge von Stufen besteht, deren Anzahl mindestens derjenigen der n. q vorhandenen Datenbitplätze in dem Muster, verkleinert um eine Einheit entspricht, und wobei die Parallelausgänge mit den Voreinstell-Eingängen der Stufen der jeweils nächsthöheren Ränge des ersten Teils (51) verbunden sind und der Voreinstelleingang der ersten Stufe des ersten Teils parallel an die Serieneingänge des ersten und zweiten Teils angeschlossen ist,

einen Verriegelungswortdecoder (54) mit paral-

lelen Eingängen, welche an die der relativen Verteilung der Bits des Verriegelungsworts im Muster entsprechenden Ausgänge des ersten Teils (51) des Schieberegisters angeschlossen sind, und

die Mittel zur Steuerung der Phasenverschiebung (55), die einen Befehl an die Phasenschiebemittel und einen Befehl zum parallelen Laden an den ersten Teil (51) des Schieberegisters richten, wenn der Decoder (54) unter den im Schieberegister gespeicherten Datenbits während einer Minimaldauer von einem Verriegelungswort keine Verriegelungswörter erkannt hat.

5. Rahmensynchronisiereinrichtung in einem Binärdatenübertragungssystem, bei welchem die Daten in Form einer isochronen Folge von Rahmen übertragen werden, von denen jeder ein im Rahmen verteiltes Verriegelungswort aufweist, dadurch gekennzeichnet, daß sie aufweist :

Taktgabemittel (70, 74) zur Erzeugung eines Taktsignals aus einer Auswahl von Taktsignalperioden der Datenbitfolge, welche ein periodisches Muster aus über die Dauer des Rahmens verteilten relativen Bitplätzen wiedergibt, von denen mindestens bestimmte Plätze entsprechend der Bitverteilung des Verriegelungsworts innerhalb eines Rahmens verteilt sind und die n Gruppen von q Elementen bilden, wobei n und q ganze Zahlen sind und die Gruppen gleichmäßig über die Dauer eines Rahmens verteilt sind,

Phasenschiebemittel, die auf Befehl gestatten, im Taktsignal einen Phasensprung zu bewirken, der mindestens einer Taktsignalperiode der Datenbitfolge entspricht, .

einen Verriegelungswortdecoder (75) des mit Paralleleingängen,

einen Vorhersagekreis (76), bestehend aus einem Decoder mit Paralleleingängen, der eine Version des Verriegelungsworts identifiziert, welche einer Drehung von entsprechen p relativen Bitplatzgruppen des Musters unterworfen wurde, wobei p eine ganze Zahl zwischen 1 und n-1 ist,

ein Schieberegister bestehend aus drei Teilen (71, 72, 73), welche parallele Datenbitfolgen aufnehmen, wobei ein erster Teil (71) durch eine erste Version ($H_1$) des Taktsignals getaktet wird, aus einer Folge von Registerstufen besteht, deren Anzahl mindestens derjenigen der n-q in einem Muster vorgesehenen Bitplätzen entspricht, parallele Voreinstelleingänge aller Stufen sowie an die Paralleleingänge des Decoders (75) und des Vorhersagekreises (76) angeschlossene Parallelausgänge besitzt, wobei der erste Teil mit einer von den Mitteln zur Steuerung der Phasenverschiebung (77) gesteuerten Voreinstellsteuerung (PS) versehen ist, während ein zweiter Teil (72) durch eine zweite Version ($H_2$) des Taktsignals getaktet wird, die gegen die erste ($H_1$) in der Phase um einen Betrag verschoben ist, der dem durch die Phasenschiebemittel in einem Zug erzeugten Phasensprung entspricht, und aus einer Folge von Registerstufen mit Parallelausgängen besteht, deren Anzahl mindestens derjenigen der n. q vorhandenen Datenbitplätzen in dem Muster, um eine Einheit verkleinert, entspricht, wobei die Parallelausgänge der Folge an die parallelen Voreinstelleingänge der unmittelbar höheren Ränge des ersten Teils (71) angeschlossen sind und zumindest die r. q ersten Stufen, wobei r die größere der Zahlen p und n-p ist, parallele Voreinstelleingänge aufweisen, wobei der zweite Teil (72) mit einer partiellen Voreinstellsteuerung (P/S) versehen ist, die von der Phasenschiebesteuerung (77) gesteuert wird, und wobei ein dritter Teil (73) durch eine dritte Version ($H_3$) des Taktsignals getaktet wird, die gegen die zweite ($H_2$) bzw. erste Version ($H_1$) um einen Betrag verschoben ist, der dem Einfachen bzw. dem Doppelten des durch die Phasenschiebemittel in einem Zug erzeugten Phasensprungs entspricht, und wobei der dritte Teil (73) eine Anzahl von Registerstufen aufweist, deren Anzahl um eine Einheit kleiner als diejenige der r. q parallelen Voreinstelleingänge des zweiten Teils (72) ist, dessen Paralelausgänge an die parallelen Voreinstelleingänge der unmittelbar höheren Ränge des zweiten Teils (72) angeschlossen sind,

und die Mittel zur Steuerung der Phasenverschiebung (77), die einen Voreinstellbefehl an die Phasenschiebemittel und einen Voreinstellbefehl an den ersten und zweiten Teil (71, 72) des Schieberegisters richten, falls weder der Decoder (75), noch der Vorhersagekreis (76) das Verriegelungswort oder eine permutierte Form des Verriegelungsworts im ersten Teil (71) des Schieberegisters während einer Minimaldauer erkannt haben, die dem Durchlauf von r Bitplatzgruppen eines Musters entspricht.

FIG.1

FIG.2

# FIG. 3

# FIG.4

FIG.5

EP 0 171 789 B1

# FIG.6

5